# EUROPEAN PATENT APPLICATION

(11) **EP 2 993 659 A1**
(43) Date of publication of application: **09.03.2016**
(21) Application number: 15155458.1
(22) Date of filing: 17.02.2015
(51) Int. Cl.: G09F 3/20, G09F 7/18, F16M 11/04, G02F 1/1333, G09F 27/00, G02F 1/167, G09F 9/30, G09F 9/37

(54) **CLIMATE-DURABLE DISPLAY DEVICE WITH DIGITAL SCREEN**

(30) Priority: 03.09.2014 US 201462045296 P
(71) Applicant: Proaction International Limited, Leicestershire LE17 4HB (GB)
(72) Inventor: Moorhouse, Miles, Olney, Buckinghamshire MK46 4BL (GB)
(74) Representative: Potter Clarkson LLP

(57) **Abstract**

Devices for displaying changeable information are provided. A device (10) may receive a digital screen (40) such that the screen (40) is visible through a window (21) for viewing information displayed on the screen. Information displayed on the screen may be updated remotely. The screen may be glare resistant or modifiable to be glare resistant, and electrophoretic inks may be used in affiliation with the digital screen for displaying information.

## Description

### TECHNICAL FIELD

The present disclosure relates to devices for displaying information.

### BACKGROUND

Many devices exist for displaying information. Some such devices include replaceable inserts for a framework. In such devices, more permanent and durable information may be printed on or in the framework, and more transitory or changeable information may be printed on inserts that can be removably inserted from the framework.

The display devices may be mountable in or on objects. For example, in automotive sales, certain display devices may hooked over a rear view mirror or removably secured onto a sun visor.

Unfortunately, certain display devices may be subject to vulnerabilities in extreme climates. Inks and dyes may fade from exposure to the sun, materials may melt or become misshapen in heat, and/or adhesives may fail in heat. Additionally, certain industries may seek more durable inserts than those printed on paper or other media. Industry may also seek a method of updating frequently changing information without the need to swap inserts.

Improved display devices with digital screens are desired that may address one or more challenges.

Features and advantages of the present disclosure will become readily appreciated as the same becomes better understood after reading the following description when considered in conjunction with the accompanying drawings.

### BRIEF DESCRIPTION OF THE DRAWINGS

FIG. 1 is a perspective front view of an exemplary display device;
FIG. 2 is a partial perspective rear view of an exemplary display device;
FIG. 3 is a side view of an exemplary display device;
FIG. 4 is a perspective front view of another exemplary display device;
FIG. 5 is a perspective front view of a further exemplary display device;
FIG. 6 is an exemplary communications schematic for remotely updating information in a digital screen.
FIG. 7 is another exemplary communications schematic for remotely updating information in a digital screen.

### DETAILED DESCRIPTION

Referring to the following description and drawings, exemplary approaches to the disclosed systems are detailed. Although the drawings represent some possible approaches, the drawings are not necessarily to scale and certain features may be exaggerated, removed, or partially sectioned to better illustrate and explain the disclosed devices. Further, the description below is not intended to be exhaustive, nor is it to limit the claims to the precise forms and configurations described and/or shown in the drawings.

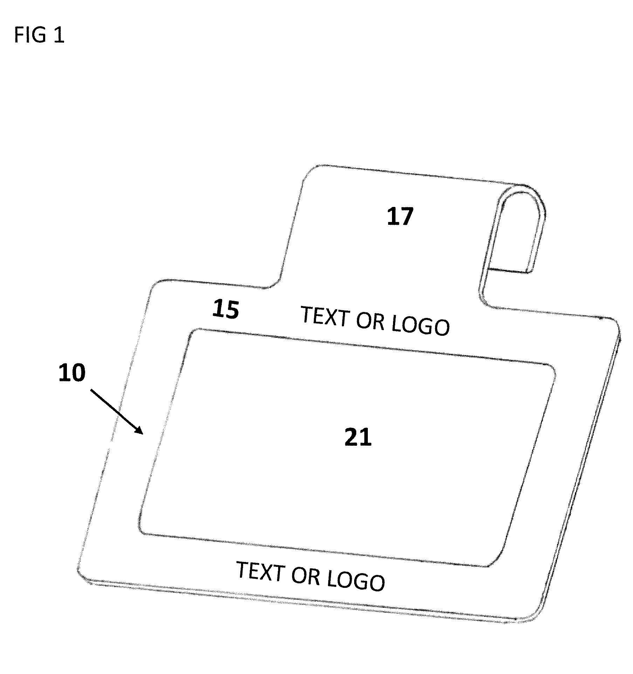

Referring to FIG. 1, a perspective view of an exemplary display device 10 is shown. Front board 15 is shown with hook 17 and window 21. "Text or Logo" is shown printed on front board 15. Insert 40, which is exemplified as a digital screen, is insertable into and removable from the device 10 behind window 21.

Front board 15 can be made of any of a number of materials, including metals, alloys, plastics, natural materials, and combinations thereof. In one example, front board 15 is made from a plastic material that is durable in extreme climates. For example, front board 15 may comprise a thermoplastic material that has a glass transition temperature Tg greater than 300 °F. Exemplary thermoplastic materials having such Tg include, without limitation, polyamideimide 527°F, Polyimide 482°F, polyethersulfone 435°F, polyetherimide 415°F, polysulfone 374°F, and polycarbonate 302°F. The material may comprise additives including, for example, one or more of heat stabilizers, light stabilizers, antioxidants, processing aids, reinforcers, and impact modifiers.

Front board 15 is generally opaque except for window 21. In one embodiment, window 21 is an opening or an aperture in the front board 15. In another embodiment, window 21 includes partially or wholly transparent material. Window 21 may include one or more of a glare resistant additive, coating or film. Window 21 may include a glare resistant screen protector. Hook 17, which extends from an edge of front board 15, may be either opaque or transparent or a mix of both. "Transparent" as used herein includes translucent materials. "Text or Logo" may be printed in one or more locations on front board 15. In one embodiment, the text or logo may be painted in UV resistant paint or printed in UV resistant ink. Such materials are commercially available. The opaque portions from front board 15 may gain opacity through application of UV resistant paint, UV resistant ink, the materials from which the front board 15 is formed, and/or application of a sticker or other layer of material on front board 15 and around but not covering window 21 in its entirety.

The hook 17 or other attachment or placement device or support mechanism can be used to securely mount or position display device 10 in or on an object. For example, a vehicle such as an automotive vehicle may have a display device 10 therein or thereon that is hooked on or around a sun visor or rear view mirror. Updatable information visible through window 21 on a digital screen may include price information or other data.

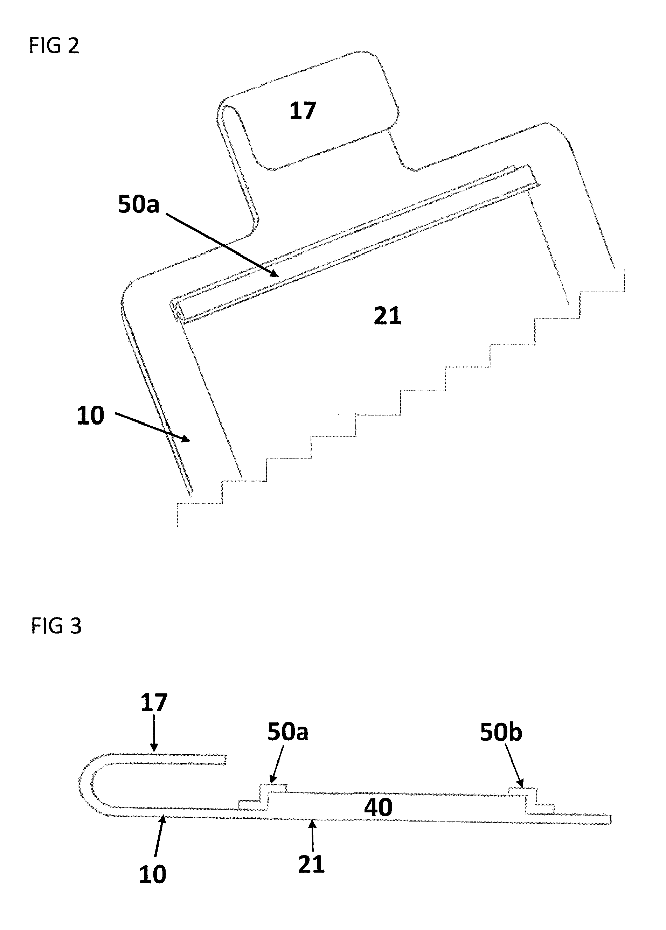

Referring to FIG. 2, a partial perspective rear view of display device 10 is shown. An exemplary support mechanism is shown using a plurality of retaining walls. Retaining wall 50a extends from the front board 15 below hook 17, and may be adapted to receive one edge of a digital screen insert 40. Retaining wall 50a may be made from the same or different material as front board 15, and it may be formed integrally with front board 15 or it may be attached thereto with one or more physical fasteners or with an adhesive including adhesives carried by adhesive strips.

Exemplary adhesive strips may be durable in climates such as those in Miami, Florida or Phoenix, Arizona as well as Minneapolis, Minnesota or Houghton, Michigan. Adhesive strips may be of materials such as viscoelastic acrylic foam. For foam embodiments, foam density may be from about 40 to about 55 lb/ft³ and have a thickness of up to about 0.025 inches to about 0.12 inches. Exemplary adhesive strips may have a long term temperature tolerance of about 160 to about 300°F, as determined by whether a tape supports at least 250 g of load per 0.5 in² in static shear for 10,000 minutes. Exemplary adhesive strips may have static sheer, as determined by ASTM D3654, of about 1400 to about 1600g/in² (for 10,000 minutes) at 72°F. Such adhesive strips may be commercially available through 3M® in the VHB™ tape product line.

Insulative material such as a fiber-containing material woven or non-woven material or a natural or synthetic rubber may optionally line an interior of retaining wall 50a for gripping the digital screen insert 40. Optionally, a back stop wall may be perpendicular or substantially perpendicular to retaining wall 50a to prevent digital screen insert 40 from sliding too far. Such back stop wall may run partially along an outer perimeter of the window 21, or it may extend through to an opposing retaining wall 50b, shown in FIG. 3.

Referring to FIG. 3, a side view of an exemplary display device 10 is shown. Hook 17 is depicted as contiguous and integrally formed with front board 15. Other configurations are contemplated. The gaps between the window 21 and the portion of retaining walls 50a and 50b that is parallel or substantially parallel to the window 21 may be sized and shaped to receive a digital screen insert 40. The digital screen insert 40 may be, by way of non-limiting example, an Apple iPad or an Amazon Kindle or another digital screen capable of receiving electronically sent information and displaying same through window 21. The digital screen insert 40 may be flexible or may be rigid. Flexible embodiments may be used where a front board has a curvature rather than being planar. The device 10 may be powered by any of a number systems or methods. By way of non-limiting example, the device 10 may be powered by solar energy or by one or more batteries. The digital display screen may optionally include a glare resistant screen protector, and it may project images using electrophoretic ink, also referred to as e-ink. The digital display may be black and white, or it may be in colour.

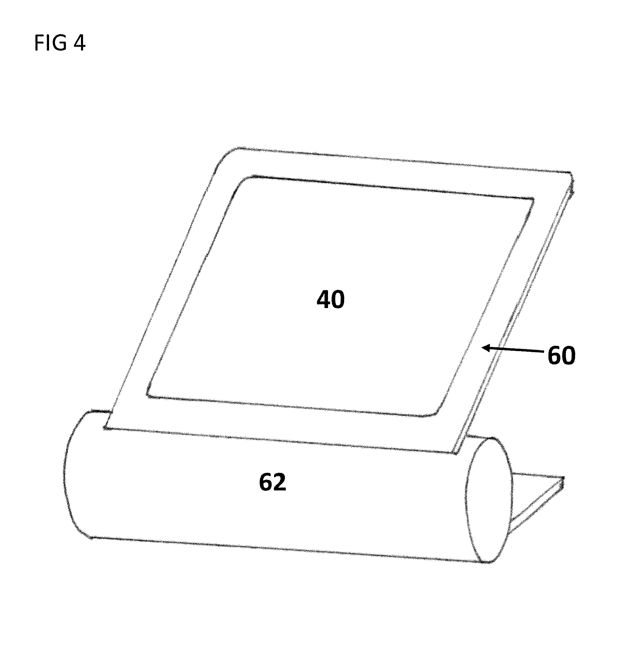

Referring to FIG. 4, another exemplary embodiment of a display device is shown. Digital screen insert 40 is bordered, at least in part, by a frame 60. An outer surface of digital screen insert 40 may be recessed from, flush with, or protrude from an outer surface of frame 60. Frame 60 may be comprised of any of a number of materials, including the materials described above in connection with front board 15. Embodiments are contemplated wherein frame 60 is omitted. In the depicted embodiment, frame 60 is insertable into support mechanism 62, perhaps in a groove therein. The support mechanism 62 may be configured to permit display of the digital screen insert 40 when support mechanism 62 is positioned on a flat or substantially flat surface such as a dashboard of an automotive vehicle. In one embodiment, support mechanism 2 and frame 60 are integrally formed. Such integral formation can by, for example, injection molding.

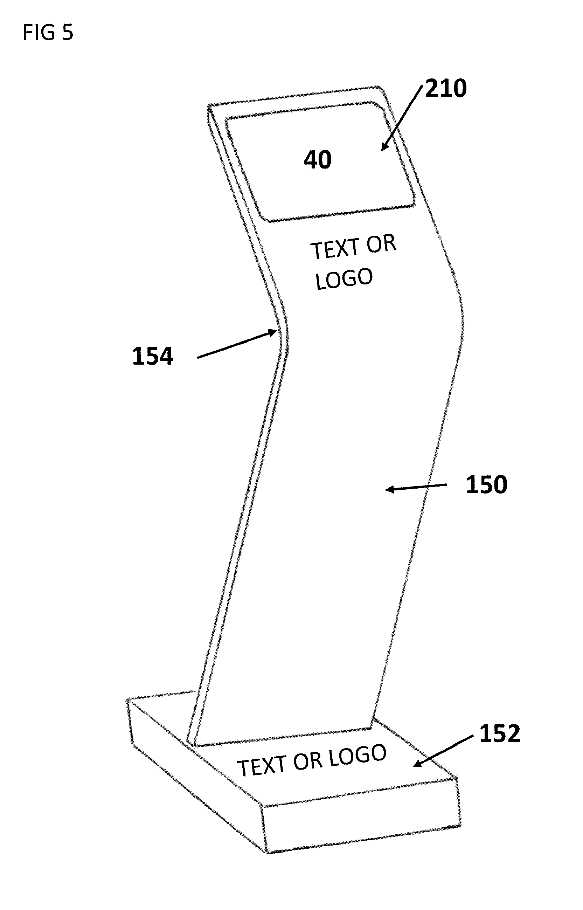

Turning to FIG 5, a further exemplary embodiment of the display device is shown. Digital screen insert 40 is insertable into and removable from a support mechanism (not shown). The support mechanism may share the same features as support mechanism using a plurality of retaining walls 50a, 50b described above with reference to FIGS 2 and 3. The support mechanism may be integral with a front board 150, or instead the support mechanism may be secured to front board 150. Support mechanism may position digital screen insert 40 in either portrait or landscape orientation.

Front board 150 in the embodiment shown in FIG 5 is an elongate front board, and it may have similar features to front board 15 described above with reference to FIG 1. Front board 150 includes window 210 which shares the same features as window 21 described above in relation to FIG 1.

Front board 150 is integral with a stand 152 so as to form a lectern. Front board 150 may instead be separate from stand 152 and may be secured to stand 152 by a physical fastener or by a secured fit. Front board 150 and stand 152 forming a lectern means that front board 150 is erect relative to stand 152. In this way, digital screen insert 40 is also erect relative to stand 152. The front board 150 may be vertical or slanted relative to the stand 152.

Stand 152 may be placed on a surface in a show room, for example, such that digital screen insert 40 is visible from a distance away from stand 152. Moreover, front board 150 may have a height that permits digital screen insert 40 to be visible at, above or below eye level. Eye level is understood to mean the height off the ground to an average human adult's eye. Eye level may instead be the height off the ground to an average child's eye, wherein the average child is of a certain age, which will depend on the audience at which the display device is aimed at.

Front board 150 may instead have a height that permits digital screen insert 40 to be at chest level, thus being visible below eye level. Chest level is understood to mean the height off the ground to an average human adult's chest. Chest level may instead be the height off the ground to an average child's chest, wherein the average child is of a certain age (depending on the audience at which the display device is aimed at). At chest level, digital screen insert 40 is visible looking down from eye level. Front board 150 may include a bend 154 (as shown in FIG 5) so as to angle digital screen insert 40 towards eye level, thus making digital screen insert 40 easier to read.

Front board 150 and/or stand 152 may include "text or logo", i.e. it may be branded. Digital screen insert 40 does not require a wired power supply to operate. Digital screen insert 40 may be powered by a battery and/or solar power.

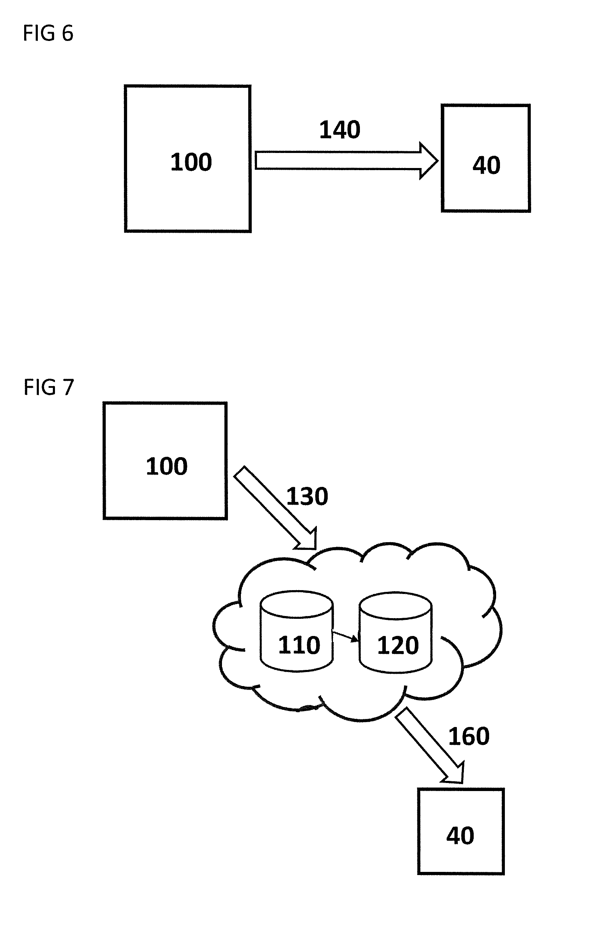

Referring to FIGs. 6 and 7, exemplary schematics for updating information on digital screen insert 40 are provided. Input device 100 may be a telephone, a mobile computing device such as a smart phone such as an Apple iPhone, a tablet or a laptop computer, a desktop computer, or another suitable device allowing user input to be accepted and ultimately transmitted through to digital screen insert 40. The type of data input and ultimately displayed (and optionally updated) may include pricing information and other sales related information such as financing terms, retailer-specific deals, marketing or legal communications or consumer offers.

In FIG. 6, input device 100 has a local connection 140 direct to digital screen insert 40. In FIG. 7, input device 100 makes a connection 130 to a network or cloud including memory 110 and at least one controller 120 before a connection 160 is made between the network or cloud to the digital screen insert 40. Controller 120 may optionally include computer readable storage media for storing data representing instructions executable by a computer or microprocessor. Computer readable storage media may include one or more of random access memory as well as various non-volatile memory such as read-only memory or keep-alive memory. Computer readable storage media may communicate with a microprocessor and input/output circuitry via a standard control/address bus. As would be appreciated by one of ordinary skill in the art, computer readable storage media may include various types of physical devices for temporary and/or persistent storage of data. Exemplary physical devices include but are not limited to DRAM, PROMS, EPROMS, EEPROMS, and flash memory. Other controllers may also be in the input device 100 and/or the digital screen insert 40. Such controllers may be in communication with one another.

Connections 140, 130 and/or 160 may made through any of a variety of hardware and software, including International Mobile Telecommunications standard or cellular 3G/4G (or a future variant), WiFi (for example, IEEE 802.11), or WiMax (for example, IEEE 802.16) access. The connections permit remote updating of information.

Such access may be through a wireless 3G/4G modem or other wireless interface. A secure connection can be established using a variety of different protocols. An example protocol is Extensible Messaging and Presence Protocol or has XMPP; however, it is to be understood that other protocols can be used. XMPP can be an efficient protocol which can also support the secure sockets layer (SSL) or transport layer security (TLS) protocol. SSL and TLS protocols can provide communication privacy and authentication based on digital certificates.

The input device 100 may include a setup application used to establish a preliminary connection with the digital screen insert 40. The setup application may be preinstalled or downloaded into the input device 100. A local pairing may be performed using a WiFi Protected Setup (WPS) or NFC connection handover.

The present disclosure has been described in an illustrative manner. It is to be understood that the terminology which has been used is intended to be in the nature of words of description rather than of limitation. Many modifications and variations of the present example are possible in light of the above teachings. Therefore, within the scope of the appended claims, the present disclosure may be practices other than as specifically described.

## Claims

1. A mountable display device, comprising:
a front board having an opaque portion and a window;
a digital screen visible through the window; and
a support mechanism for removably positioning the digital screen such that at least a portion of the screen is visible through the window.

2. The display device of claim 1, wherein the digital screen includes remotely updatable displayed information.

3. The display device of any preceding claim, wherein the displayed information is remotely updatable through an input device using a WiFi connection.

4. The display device of any preceding claim, wherein the digital screen is glare resistant, is covered with a glare resistant screen protector, has a reflective display, comprises electrophoretic ink or is flexible.

5. The display device of any preceding claim, wherein the digital screen is powered by at least one of a rechargeable battery or solar power.

6. The display device of any preceding claim, wherein the support mechanism is integrally formed with the front board, is attached to the front board with one or more of an adhesive or a mechanical fastener, or is attached to the front board at least in part by an adhesive strip having a long term temperature tolerance of about 160 to about 300 °F and a static shear of about 1400 to about 1600 at 72°F.

7. The display device of any preceding claim, further comprising a hook extending from an edge of the front board.

8. The display device of any preceding claim, further comprising an attachment mechanism securable to a sun visor or rear view mirror of an automotive vehicle.

9. The display device of claim 8, wherein the attachment mechanism is a hook integrally formed with the front board.

10. The display device of any preceding claim further comprising a stand integral or cooperable with the front board so as to form a lectern.

11. A system for updating a display device, comprising:
an input device, optionally wherein the input device is a mobile computing device;
a remotely updatable digital screen in communication with the input device; and
a support mechanism for removably securing the digital screen in a position wherein the digital screen is visible.

12. The system of claim 11 wherein the digital screen is adapted to communicate through a WiFi connection with the input device for remote updating.

13. The system of claim 11 or claim 12 wherein the support mechanism is sized and shaped to permit the device to be hung from a sun visor in a vehicle such that the digital screen is visible through a vehicle windshield.

14. The system of any one of claims 11 to 13 wherein the support mechanism is sized and shaped to be positionable on a top surface of a vehicle dashboard such that the digital screen is visible through a vehicle windshield.

15. The system of any one of claims 11 to 14 further comprising a stand, wherein the stand and the support mechanism are sized and shaped to form a lectern.
